# EUROPEAN PATENT APPLICATION

(11) **EP 4 664 955 A1**
(43) Date of publication of application: **17.12.2025**
(21) Application number: 23920485.2
(22) Date of filing: 09.02.2023
(51) Int. Cl.: H04W 12/041

(54) **SECURITY PROCESSING METHOD AND DEVICE FOR RELAY COMMUNICATION**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Gunzelmann, Rainer
(86) International application number: PCT/CN2023/075295
(87) International publication number: WO 2024/164277

(57) **Abstract**

The present disclosure relates to the technical field of communications, and provides a security processing method and device for relay communication. The method comprises: in a U2U relay communication scenario, for a source UE, a relay UE and a target UE, a first key related to RSC can be determined, and then U2U relay communication can be performed according to the first key. Therefore, an effective security protection solution is provided in U2U relay communication, and the security of U2U relay communication is improved.

## Description

### TECHNICAL FIELD

The disclosure relates to the field of communication technologies, and in particular relates to a security processing method and a security processing apparatus for relay communication.

### BACKGROUND

5th generation mobile communication technology (5G) proximity-based services (ProSe) enable peer user equipments (UEs) to communicate with each other over a relay UE. This means that if a source UE cannot communicate directly with a target UE, the source UE will attempt to discover a relay UE to communicate with the target UE, i.e., UE-to-UE (U2U) relay communication.

However, at present, there is a lack of effective means for security protection in the U2U relay communication, which in turn affects the security of the U2U relay communication.

### SUMMARY

Embodiments of the disclosure provide a security processing method and a security processing apparatus for relay communication, which may provide an effective security protection scheme in the U2U relay communication and improve the security of the U2U relay communication.

According to a first aspect of embodiments of the disclosure, a security processing method for relay communication is provided, which is performed by a UE. The method includes: determining a first key related to a relay service code (RSC); performing U2U relay communication according to the first key.

In some embodiments of the disclosure, performing the U2U relay communication according to the first key includes: generating, according to the first key and service identifier (ID) information in a ProSe, a session key related to a service in the ProSe; and performing the U2U relay communication of the ProSe according to the session key.

In some embodiments of the disclosure, the service ID information is configured to identify service information used by the UE on a U2U relay communication link.

In some embodiments of the disclosure, generating, according to the first key and the service ID information in the ProSe, the session key related to the service in the ProSe includes: calculating to obtain the session key via a key derivation function (KDF) based on the first key, the service ID information, and random number information.

In some embodiments of the disclosure, a parameter of the KDF for calculating the session key includes at least one of:
the first key;
the service ID information;
a length of the service ID information;
a first random number;
a length of the first random number;
a second random number; or
a length of the second random number.

In some embodiments of the disclosure, determining the first key related to the RSC includes: generating the first key related to the RSC based on a long-term credential.

In some embodiments of the disclosure, the method further includes: in a case where a new RSC is provided in a direct communication request (DCR) message, regenerating a second key related to the new RSC based on the long-term credential, and performing the U2U relay communication according to the second key regenerated.

In some embodiments of the disclosure, generating the first key related to the RSC based on the long-term credential includes: generating the first key based on the long-term credential by exchanging an authentication signaling.

According to a second aspect of embodiments of the disclosure, a security processing apparatus for relay communication is provided, which is applied to a UE. The security processing apparatus includes: a generation module configured to determine a first key related to a RSC; and a communication module configured to perform U2U relay communication according to the first key.

According to a third aspect of embodiments of the disclosure, a communication apparatus is provided, which includes: a transceiver; a memory; and a processor connected to the transceiver and the memory respectively. The processor is configured to, by executing computer-executable instructions on the memory, to control wireless signal transceiving of the transceiver and to implement the method according to the first aspect.

According to a fourth aspect of embodiments of the disclosure, a computer storage medium is provided. The computer storage medium stores computer-executable instructions which, when executed by a processor, cause the method according to the first aspect to be implemented.

According to the security processing method for relay communication and the security processing apparatus provided in the embodiments of the disclosure, in the scenario of U2U relay communication, for a source UE, a relay UE, and a target UE, the first key related to the RSC may be determined, and then the U2U relay communication may be performed according to the first key. Therefore, the effective security protection scheme is provided in the U2U relay communication, improving the security of the U2U relay communication.

Additional aspects and advantages of the disclosure will be set forth in part in the following description, and in part will become apparent from the following description, or be learned through the practice of the disclosure.

### BRIEF DESCRIPTION OF THE DRAWINGS

The above and/or additional aspects and advantages of the disclosure will become apparent and easily understandable from the following description of embodiments in conjunction with the accompanying drawings.
FIG. 1 is a schematic diagram of an example architecture according to an embodiment of the disclosure.
FIG. 2 is a schematic flowchart of a security processing method for relay communication according to an embodiment of the disclosure.
FIG. 3 is a schematic flowchart of a security processing method for relay communication according to an embodiment of the disclosure.
FIG. 4 is a schematic flowchart of a security processing method for relay communication according to an embodiment of the disclosure.
FIG. 5 is a schematic diagram of an example according to an embodiment of the disclosure.
FIG. 6 is a block diagram of a security processing apparatus for relay communication according to an embodiment of the disclosure.
FIG. 7 is a schematic diagram of a communication apparatus according to an embodiment of the disclosure.
FIG. 8 is a schematic diagram of a chip according to an embodiment of the disclosure.

### DETAILED DESCRIPTION

Embodiments of the disclosure are described in detail below, examples of which are illustrated in the accompanying drawings. The same or similar reference numerals represent the same or similar elements or elements with the same or similar functions throughout. The embodiments described below with reference to the accompanying drawings are exemplary and are intended to explain the disclosure, but should not be construed as limiting the disclosure. It should be noted that, without conflict, embodiments of the disclosure and features in the embodiments may be combined with each other.

The terms used in the disclosure are only for the purpose of describing specific embodiments, and are not intended to limit the disclosure. The singular forms of "a" and "the" used in the embodiments of the disclosure and attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "while" or "in response to determining".

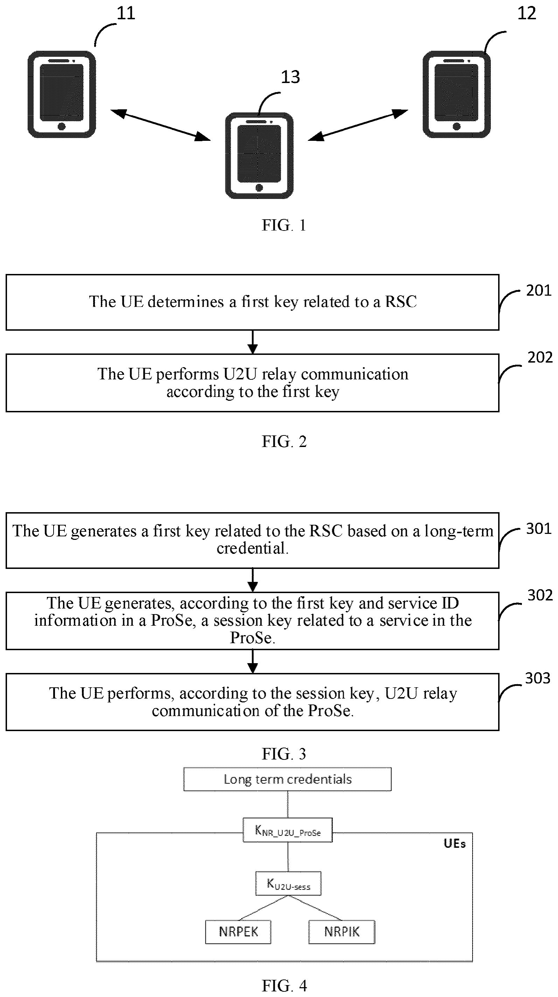

In 3GPP TR 33.740[1], 5G ProSe enables peer UEs to communicate with each other over a relay UE. As shown in FIG. 1, if a source UE 11 cannot communicate directly with a target UE 12, the source UE 11 will attempt to discover a relay UE 13 to communicate with the target UE 12, i.e., U2U relay communication. The introduction of this new scenario puts forward new requirements for existing security mechanisms. However, at present, there is a lack of effective means for security protection in the U2U relay communication, which in turn affects the security of the U2U relay communication.

Therefore, embodiments of the disclosure proposes a security processing method and a security processing apparatus for relay communication, which provide an effective security protection scheme in the U2U relay communication and improve the security of the U2U relay communication.

The security processing method for relay communication and the apparatus provided in embodiments of the disclosure will be described in detail below with reference to the accompanying drawings.

FIG. 2 shows a schematic flowchart of a security processing method for relay communication according to an embodiment of the disclosure. As shown in FIG. 2, the method may be applied to a UE for execution. As shown in FIG. 1, the UE may specifically be any one of the source UE 11, the target UE 12, and the relay UE 13. The method of this embodiment may include the following steps.

At step 201, the UE determines a first key related to a RSC.

In some examples, step 201 may specifically include: the UE generates the first key related to the RSC based on a long-term credential. The long-term credential may be provided to the UE and may form a security root credential of a proximity communication 5 (PC5) unicast link. The long-term credential may include, depending on actual use case requirements, a symmetric key or a public-private key pair.

The RSC represents a relay service code, which may be configured to identify a ProSe service (proximity-based service) provided by a 5G ProSe U2U relay. Each ProSe service has a corresponding RSC. In this embodiment, for the RSC corresponding to the current ProSe service in 5G ProSe U2U relay communication, the first key related to the RSC may be generated from the long-term credential. This first key may be configured for security protection in the U2U relay communication, for example, the first key may be configured to establish a security between a U2U relay and a ProSe terminal UE communicating over a new radio (NR) PC5 unicast link.

At step 202, the UE performs U2U relay communication according to the first key.

By applying the security processing method for relay communication provided in this embodiment, in the scenario of U2U relay communication, for the source UE, relay UE, and target UE, the first key related to the RSC may be determined, and then the U2U relay communication may be performed according to the first key. Therefore, the effective security protection scheme is provided in the U2U relay communication, improving the security of the U2U relay communication.

FIG. 3 shows a schematic flowchart of a security processing method for relay communication according to an embodiment of the disclosure. Based on the embodiment shown in FIG. 2, as shown in FIG. 3, the method may be applied to a UE (as shown in FIG. 1, any one of the source UE 11, the target UE 12, and the relay UE 13), and may include the following steps.

At step 301, the UE generates a first key related to the RSC based on a long-term credential.

In some examples, step 301 may specifically include: the UE generates the first key related to the RSC based on the long-term credential by exchanging an authentication signaling.

For example, a first key K_{NR_U2U_ProSe} related to the RSC is derived from the long-term credential by the UE exchanging the authentication signaling with each other. It should be noted that, for the convenience of description, this embodiment uses K_{NR_U2U_ProSe} as an example to illustrate the first key, but does not impose any restrictions on the specific name of the first key. The K_{NR_U2U_ProSe} may be a key bound to a U2U relay service (i.e., RSC), and may be configured to establish the security between the U2U relay and the ProSe terminal UE communicating over the NR PC5 unicast link.

At step 302, the UE generates, according to the first key and service identifier (ID) information in a ProSe, a session key related to a service in the ProSe.

The RSC is configured to identify the ProSe provided by the relay UE. The RSC may be associated with one or more services. In a case where one RSC is associated with a plurality of services, traffic from different services is transmitted over the same PC5 U2U unicast link and protected by the same shared session key. However, if this session key is leaked/compromised, the traffic of all these services may be decrypted, which in turn affects the security of the U2U relay communication. Therefore, in this embodiment, the session key may be generated according to the first key and the service ID information in the ProSe. This session key is configured for the security protection of the service in the U2U relay communication, so that different services have their corresponding session keys. Even if one of the session keys is leaked/compromised, it will not affect the security of the traffic of other services.

In some examples, the service ID information of the ProSe may be configured to identify service information used by the UE on a U2U relay communication link. For example, the service ID information of the ProSe may be ProSe Code, ProSe Identifier, ProSe Application ID, Application ID, etc., which is not limited in this embodiment.

For instance, a session key K_{U2U-sess} related to the service information (the service information identified by the service ID information) is generated based on a first key K_{NR_U2U_ProSe} and service ID information of the ProSe. It should be noted that, for the convenience of description, this embodiment uses K_{U2U-sess} as an example to illustrate the session key, but does not impose any restrictions on the specific name of the session key. K_{U2U-sess} may be a key derived by the UE from K_{NR_U2U_ProSe}, and specifically may be a session key used to protect a specific U2U relay ProSe service between UEs. During an active unicast communication session between UEs, K_{U2U-sess} may be refreshed by running a rekeying procedure.

Further, in some examples, step 302 may specifically include: calculating to obtain the session key via a KDF based on the first key, the service ID information of the ProSe, and random number information. In this way, the effective session key may be accurately generated.

Specifically, in some examples, a parameter of the KDF for calculating the session key may comprises at least one of:
the first key K_{NR_U2U_ProSe}; the service ID information of the ProSe (such as ProSe Code or Application ID, etc.); a length of the service ID information (such as the length of ProSe Code or Application ID, etc.); a first random number (such as random number 1); a length of the first random number (such as the length of random number 1); a second random number (such as random number 2); or a length of the second random number (such as the length of random number 2).

For example, the random number 1, the length of the random number 1, the random number 2, the length of the random number 2, ProSe Code, the length of ProSe Code, along with the first key KNR_U2U_ProSe are input into the KDF for calculation, such as calculating a corresponding hash value or a message-digest algorithm 5 (MD5) value, etc., to obtain the session key KU2U-sess.

At step 303, the UE performs, according to the session key, U2U relay communication of the ProSe.

In some examples, step 303 may specifically include: generating a key A and a key B according to the session key, where the key A (such as NR PC5 encryption key (NRPEK)) may be configured for encrypting communication information, and the key B (such as NR PC5 integrity key (NRPIK)) is configured for an integrity transmission of the communication information; then performing the U2U relay communication of the ProSe by using the key A and key B. For example, the key A and the key B are respectively used in a confidentiality algorithm and an integrity algorithm of the communication information to protect a confidentiality and an integrity of a PC5-S signaling, a PC5 radio resource control (RRC) signaling, and PC5 user plane data. The key A and the key B are derived from the session key K_{U2U-sess}, and both the key A and the key B will be automatically refreshed every time K_{U2U-sess} is changed.

Based on the contents of the above examples, as shown in FIG. 4, which is a schematic diagram of a specific example architecture, for the source UE, the target UE, and the relay UE, the first key K_{NR_U2U_ProSe} related to RSC may be derived from the long-term credential by exchanging the authentication signaling. Then, the session key K_{U2U-sess} is generated according to K_{NR_U2U_ProSe} and the service ID information of the ProSe. NRPEK and NRPIK are then generated based on K_{U2U-sess}, which are respectively used in the confidentiality algorithm and the integrity algorithm of the communication information, thereby ensuring the security of the U2U relay communication.

By applying the security processing method for relay communication provided in this embodiment, in the scenario of U2U relay communication, for the source UE, the relay UE, and the target UE, the first key related to the RSC may be generated based on the long-term credential, and then the U2U relay communication may be performed according to this first key. Therefore, the effective security protection scheme is provided in the U2U relay communication, improving the security of the U2U relay communication.

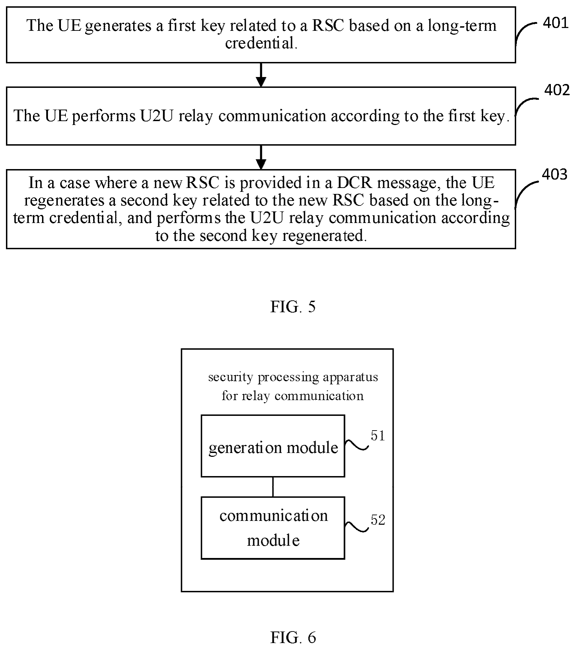

FIG. 5 is a schematic flowchart of a security processing method for relay communication according to an embodiment of the disclosure. Based on the embodiment shown in FIG. 2, as shown in FIG. 5, the method may be applied to a UE (as shown in FIG. 1, any one of the source UE 11, the target UE 12, and the relay UE 13), and may include the following steps.

At step 401, the UE generates a first key related to a RSC based on a long-term credential.

At step 402, the UE performs U2U relay communication according to the first key.

The specific process may refer to the corresponding descriptions in the examples in FIGS. 1 to 4, and will not be repeated here.

At step 403, in a case where a new RSC is provided in a DCR message, the UE regenerates a second key related to the new RSC based on the long-term credential, and performs the U2U relay communication according to the second key regenerated.

The DCR message refers to the direct communication request message. The new RSC provided in the DCR message is different from the RSC (original one) corresponding to the first key generated in step 401, and may be understood as the newly provided RSC in the U2U relay communication. Different RSCs correspond to respective ProSes. When the new RSC is provided in the DCR message, the UE will no longer use the first key corresponding to the original RSC, but regenerate the second key related to the new RSC based on the long-term credential, and perform the U2U relay communication according to the second key regenerated.

For example, before performing an authentication process to derive K_{NR_U2U_ProSe}, the RSC is provided in the DCR message. Based on the provided RSC, a neighboring terminal UE and a U2U relay may authenticate each other and derive the corresponding K_{NR_U2U_ProSe}. If the new RSC is provided, a new K_{NR_U2U_ProSe} needs to be generated, which is related to the new RSC, and then the U2U relay communication is performed according to the new K_{NR_U2U_ProSe}.

By applying the security processing method for relay communication provided in this embodiment, the effective security protection scheme is provided in the U2U relay communication, improving the security of the U2U relay communication.

In the embodiments provided by the disclosure above, the methods provided by the embodiments of the disclosure are introduced from the perspective of UE. In order to realize functions in the methods provided by the embodiments of the disclosure, the UE may include a hardware structure and a software module, and each of the above functions may be implemented in the form of the hardware structure, the software module, or a combination of the hardware structure and the software module. A certain function among the above functions may be executed in the form of the hardware structure, the software module, or the combination of the hardware structure and the software module.

Corresponding to the security processing methods for relay communication provided by the above several embodiments, the disclosure also provides a security processing apparatus for relay communication. Since the security processing apparatus for relay communication provided by the embodiments of the disclosure corresponds to the security processing methods for relay communication provided by the above several embodiments, the implementations of the security processing method for relay communication are also applicable to the security processing apparatus for relay communication provided by the disclosure, and will not be described in detail in this embodiment.

FIG. 6 is a schematic diagram of a security processing apparatus for relay communication provided by an embodiment of the disclosure. The security processing apparatus for relay communication may be applied in a UE (as shown in Fig. 1, any one of the source UE 11, the target UE 12, and the relay UE 13).

As shown in FIG. 6, the apparatus may include: a generation module 51 configured to determine a first key related to a RSC; and a communication module 52 configured to perform U2U relay communication according to the first key.

In some embodiments, the communication module 52 is specifically configured to generate, according to the first key and service ID information in the ProSe, a session key related to a service in the ProSe; and perform the U2U relay communication of the ProSe according to the session key.

In some embodiments, the service ID information is configured to identify service information used by the UE on a U2U relay communication link.

In some embodiments, the communication module 52 is further specifically configured to calculate to obtain the session key via a KDF based on the first key, the service ID information, and random number information.

In some embodiments, a parameter of the KDF for calculating the session key include at least one of:
the first key; the service ID information; a length of the service ID information; a first random number; a length of the first random number; a second random number; or a length of the second random number.

In some embodiments, the generation module 51 is specifically configured to generate the first key related to the RSC based on a long-term credential.

In some embodiments, the generation module 51 is further configured to in a case where a new RSC is provided in a DCR message, regenerate a second key related to the new RSC based on the long-term credential. The communication module 52 is further configured to perform the U2U relay communication according to the second key regenerated.

In some embodiments, the generation module 51 is specifically configured to generate the first key based on the long-term credential by exchanging an authentication signaling.

By applying the technical solution of the disclosure, the effective security protection scheme is provided in the U2U relay communication, which improves the security of the U2U relay communication.

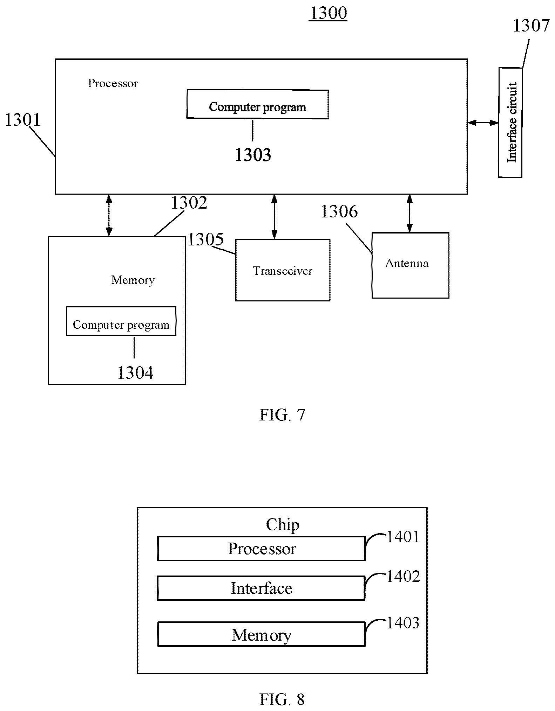

FIG. 7 is a schematic diagram of a communication apparatus 1300 according to an embodiment of the disclosure. The communication apparatus 1300 may be a network device, a UE, or a chip, a chip system or a processor that supports the network device to realize the above method, or a chip, a chip system or a processor that supports the UE to realize the above method. The apparatus is configured to realize the method described in the above method embodiments with reference to the descriptions of the above-described method embodiments.

The communication apparatus 1300 may include one or more processors 1301. The processor 1301 may be a general purpose processor or a dedicated processor, such as, a baseband processor or a central processor. The baseband processor is configured for processing communication protocols and communication data. The central processor is configured for controlling communication apparatuses (e.g., base station, baseband chip, terminal, terminal chip, a distributed unit (DU) or a centralized unit (CU)), executing computer programs, and processing data of the computer programs.

In some embodiments, the communication apparatus 1300 may further include one or more memories 1302 on which a computer program 1304 may be stored. When the processor 1301 executes the computer program 1304, the communication apparatus 1300 is caused to perform the method described in the above method embodiments. In some embodiments, data may also be stored in the memory 1302. The communication apparatus 1300 and the memory 1302 may be provided separately or may be integrated together.

In some embodiments, the communication apparatus 1300 may also include a transceiver 1305 and an antenna 1306. The transceiver 1305 may be referred to as transceiver unit, transceiver machine, or transceiver circuit, for realizing a transceiving function. The transceiver 1305 may include a receiver and a transmitter. The receiver may be referred to as receiver machine or receiving circuit, for realizing a receiving function. The transmitter may be referred to as transmitter machine or transmitting circuit, for realizing a transmitting function.

In some embodiments, the communication apparatus 1300 may also include one or more interface circuits 1307. The interface circuits 1307 are configured to receive code instructions and transmit the code instructions to the processor 1301. The processor 1301 runs the code instructions to cause the communication apparatus 1300 to perform the method described in the method embodiments.

In an implementation, the processor 1301 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be configured for code/data reading and writing, or may be configured for signal transmission or delivery.

In an implementation, the processor 1301 may store a computer program 1303 that may be run by the processor 1301 and may cause the communication apparatus 1300 to perform the method described in the method embodiments above. The computer program 1303 may be solidified in the processor 1301, in which case the processor 1301 may be implemented by hardware.

In an implementation, the communication apparatus 1300 may include circuits. The circuits may implement the sending, receiving or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the descriptions of the above embodiments may be a network device or a UE, but the scope of the communication apparatus described in the disclosure is not limited thereto, and the structure of the communication apparatus may not be limited by FIG. 7. The communication apparatus may be a stand-alone device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) a module that may be embedded within other devices;
(5) a receiver, a terminal, a smart terminal, a cellular phone, a wireless device, a handheld machine, a mobile unit, a in-vehicle device, a network device, a cloud device, an artificial intelligence device, and the like; or
(6) others.

The case that the communication apparatus is a chip or a chip system may refer to the schematic diagram of the chip shown in FIG. 8, which is a schematic diagram of a chip according to an embodiment of the disclosure. The chip shown in FIG. 8 includes a processor 1401 and an interface 1402. There may be one or more processors 1401, and there are a plurality of interfaces 1402.

In some embodiments, the chip further includes a memory 1403 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the terms "machine-readable medium" and "computer-readable medium" refer to any computer program product, device, and/or apparatus (e.g., magnetic disk, optical disk, memory, programmable logic device (PLD)) for providing machine instructions and/or data to a programmable processor, including a machine-readable medium that receives machine instructions as a machine-readable signal. The term "machine-readable signal" refers to any signal used to provide machine instructions and/or data to a programmable processor.

The systems and technologies described herein may be implemented in a computing system (e.g., as a data server) including backend components, or a computing system (e.g., an application server) including middleware components, or a computing system (e.g., a user computer with a graphical user interface or web browser through which a user can interact with implementations of the systems and technologies described herein) including frontend components, or a computing system including any combination of such backend, middleware, or frontend components. The components of the system may be interconnected by any form or medium of digital data communication (e.g., a communication network). Examples of communication networks include: a local area network (LAN), a wide area network (WAN), and the Internet.

The computer system may include a client and a server. The client and the server are generally remote from each other and typically interact via a communication network. The relationship of client and server arises by virtue of computer programs running on the respective computers and having a client-server relationship to each other.

It should be understood that the various forms of processes shown above may be used to reorder, add, or delete steps. For example, the steps described in the present disclosure can be executed in parallel, sequentially, or in different orders, as long as the desired results of the technical solutions of the disclosure may be achieved, which is not limited herein.

In addition, it should be understood that the various embodiments described in the disclosure may be implemented independently, or in combination with other embodiments where the solution permits.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A security processing method for relay communication, performed by a user equipment (UE), comprising:
determining a first key related to a relay service code (RSC); and
performing UE-to-UE (U2U) relay communication according to the first key.

2. The method according to claim 1, wherein performing the U2U relay communication according to the first key comprises:
generating, according to the first key and service identifier (ID) information in a proximity-based service (ProSe), a session key related to a service in the ProSe; and
performing the U2U relay communication of the ProSe according to the session key.

3. The method according to claim 2, wherein the service ID information is configured to identify service information used by the UE on a U2U relay communication link.

4. The method according to claim 2 or 3, wherein generating, according to the first key and the service ID information in the ProSe, the session key related to the service in the ProSe comprises:
calculating to obtain the session key via a key derivation function (KDF) based on the first key, the service ID information, and random number information.

5. The method according to claim 4, wherein a parameter of the KDF for calculating the session key comprises at least one of:
the first key;
the service ID information;
a length of the service ID information;
a first random number;
a length of the first random number;
a second random number; or
a length of the second random number.

6. The method according to any one of claims 1 to 5, wherein determining the first key related to the RSC comprises:
generating the first key related to the RSC based on a long-term credential.

7. The method according to claim 6, further comprising:
in a case where a new RSC is provided in a direct communication request (DCR) message, regenerating a second key related to the new RSC based on the long-term credential, and performing the U2U relay communication according to the regenerated second key.

8. The method according to claim 6, wherein generating the first key related to the RSC based on the long-term credential comprises:
generating the first key based on the long-term credential by exchanging an authentication signaling.

9. A security processing apparatus for relay communication, applied to a user equipment (UE), comprising:
a generation module configured to determine a first key related to a relay service code (RSC); and
a communication module configured to perform UE-to-UE (U2U) relay communication according to the first key.

10. A communication apparatus, comprising: a transceiver; a memory; and a processor connected to the transceiver and the memory respectively, wherein the processor is configured, by executing computer-executable instructions on the memory, to control wireless signal transceiving of the transceiver and to implement the method according to any one of claims 1 to 8.

11. A computer storage medium storing computer-executable instructions which, when executed by a processor, cause the method according to any one of claims 1 to 8 to be implemented.
